**Europäisches Patentamt**

**European Patent Office**

**Office européen des brevets**

(11) Numéro de publication : **0 415 251 B1**

(19)

(12) **FASCICULE DE BREVET EUROPEEN**

(45) Date de publication du fascicule du brevet :
**17.03.93 Bulletin 93/11**

(21) Numéro de dépôt : **90116054.9**

(22) Date de dépôt : **22.08.90**

(51) Int. Cl.⁵ : $G01D\ 5/243$, $G01P\ 15/10$, $G01L\ 1/16$

(54) **Circuit de traitement des signaux délivrés par deux capteurs mesurant en mode différentiel une grandeur physique.**

(30) Priorité : **01.09.89 CH 3186/89**
**04.09.89 FR 8911628**

(43) Date de publication de la demande :
**06.03.91 Bulletin 91/10**

(45) Mention de la délivrance du brevet :
**17.03.93 Bulletin 93/11**

(84) Etats contractants désignés :
**DE ES GB IT NL SE**

(56) Documents cités :
**EP-A- 0 101 669**
**EP-A- 0 316 644**
**ELECTRONICS & WIRELESS WORLD. vol. 84,**
**no. 1514, octobre 1978, SUTTON GB pages 75 -**
**76; R.Thompson: "Frequency synthesizers-2"**

(73) Titulaire : **ASULAB S.A.**
**Faubourg du Lac 6**
**CH-2501 Bienne (CH)**

(72) Inventeur : **Hottinger, Werner**
**Rue A. Bachelin 5**
**CH-2000 Neuchâtel (CH)**
Inventeur : **Wiget, Fridolin**
**Avenue des Alpes 22**
**CH-2000 Neuchâtel (CH)**

(74) Mandataire : **Barbeaux, Bernard et al**
**ICB Ingénieurs Conseils en Brevets SA**
**Passage Max. Meuron 6**
**CH-2001 Neuchâtel (CH)**

**EP 0 415 251 B1**

## Description

La présente invention a pour objet un circuit de traitement des signaux fournis par deux capteurs mesurant en mode différentiel une grandeur physique, et fournissant un signal logique représentatif de la valeur numérique de cette grandeur qui peut être une force, une accélération, une pression, une température, un déplacement, etc.

Un tel circuit est déjà connu de EP-A-0 316 644.

Le circuit selon l'invention comme défini dans la revendication 1, qui reçoit un premier signal ayant une première période de l'un des capteurs, et un second signal ayant une seconde période de l'autre capteur, ces périodes variant en sens inverse l'une de l'autre en fonction de la grandeur physique, est particulièrement remarquable en ce qu'il comprend :

- un premier moyen de comptage pour compter à l'intérieur d'une période de mesure un nombre entier $N_1$ de périodes $T_1$ du premier signal $S_1$,
- un second moyen de comptage pour compter à l'intérieur de ladite période de mesure un nombre entier $N_2$ de périodes $T_2$ du second signal $S_2$, et
- un circuit logique pour délivrer un signal $S_m$ représentatif de la différence entre la durée $N_1.T_1$ de comptage du premier moyen de comptage et la durée $N_2.T_2$ de comptage du second moyen de comptage, ce signal $S_m$ étant représentatif de la valeur de ladite grandeur physique.

De manière préférée, on utilise des moyens de comptage permettant de modifier la valeur des nombres $N_1$ et $N_2$, tels que, par exemple, des compteurs binaires ou des diviseurs à taux de division ajustable. On peut ainsi ajuster $N_1$ et $N_2$ en fonction des caractéristiques des capteurs (qui peuvent varier légèrement même pour des capteurs issus d'une même série de fabrication) et en fonction des conditions de travail des capteurs (variation de température, précontraintes, ...).

Il est clair que selon les valeurs choisies pour $N_1$ et $N_2$ et les instants de début de comptage par les deux moyens de comptage, les intervalles de temps de longueur $N_1.T_1$ et $N_2.T_2$ peuvent se succéder, se chevaucher partiellement ou se trouver inclus l'un dans l'autre.

Pour simplifier la structure du circuit logique, on choisit de préférence $N_1$ et $N_2$ tel que la durée $N_1.T_1$ soit toujours supérieure à la durée $N_2.T_2$ et on fait débuter le comptage par le second moyen de comptage après le début du comptage par le premier moyen de comptage, le retard étant choisi pour que le second moyen de comptage termine son comptage avant le premier moyen de comptage.

D'autres caractéristiques et avantages du circuit de traitement de signaux selon l'invention apparaîtront à la lecture de la description qui suit, d'une forme possible de réalisation de ce circuit, faite dans le cadre d'un accéléromètre. Cette description qui est fournie seulement à titre explicatif et qui n'est évidemment pas limitative se réfère au dessin annexé sur lequel :

- la figure 1 montre schématiquement, vu de profil, un exemple d'accéléromètre différentiel, qui comporte deux résonateurs à quartz;
- la figure 2 est un schéma-bloc qui montre ces résonateurs, les circuits d'entretien qui leur sont associés et le circuit de traitement de signaux selon l'invention lorsqu'il se présente sous la forme de réalisation que l'on a choisie comme exemple;
- la figure 3 est le schéma d'un circuit logique qui fait partie du circuit de la figure 2;
- la figure 4 est un diagramme qui montre la forme des principaux signaux apparaissant dans les circuits représentés sur les figures 2 et 3;
- la figure 5 est le schéma d'un circuit de déclenchement qui fait également partie du circuit de la figure 2; et
- la figure 6 est un diagramme qui montre la forme des signaux apparaissant dans le circuit de la figure 5 et de certains signaux déjà représentés sur la figure 4.

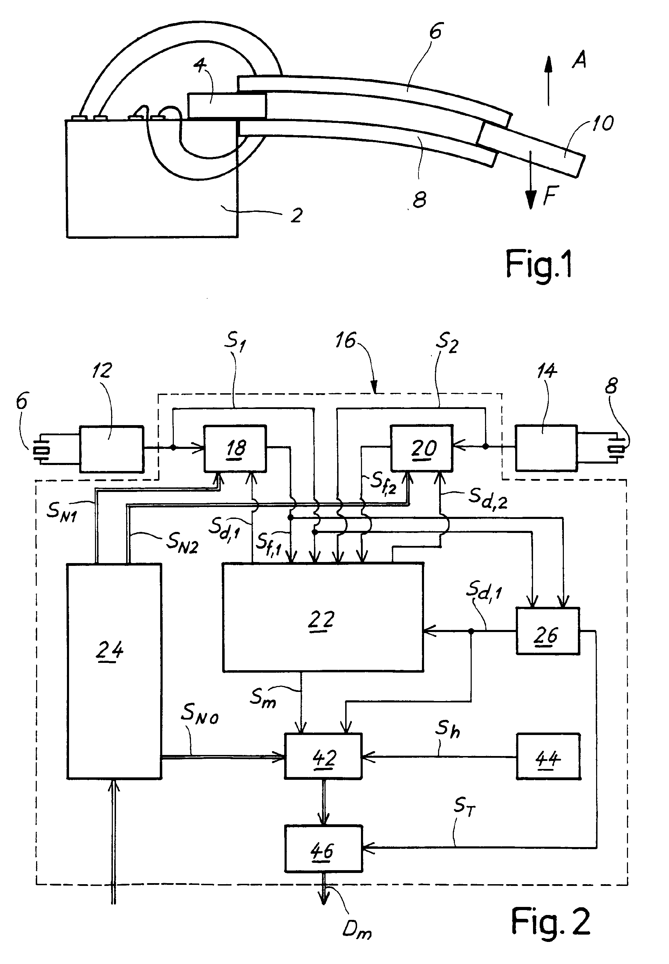

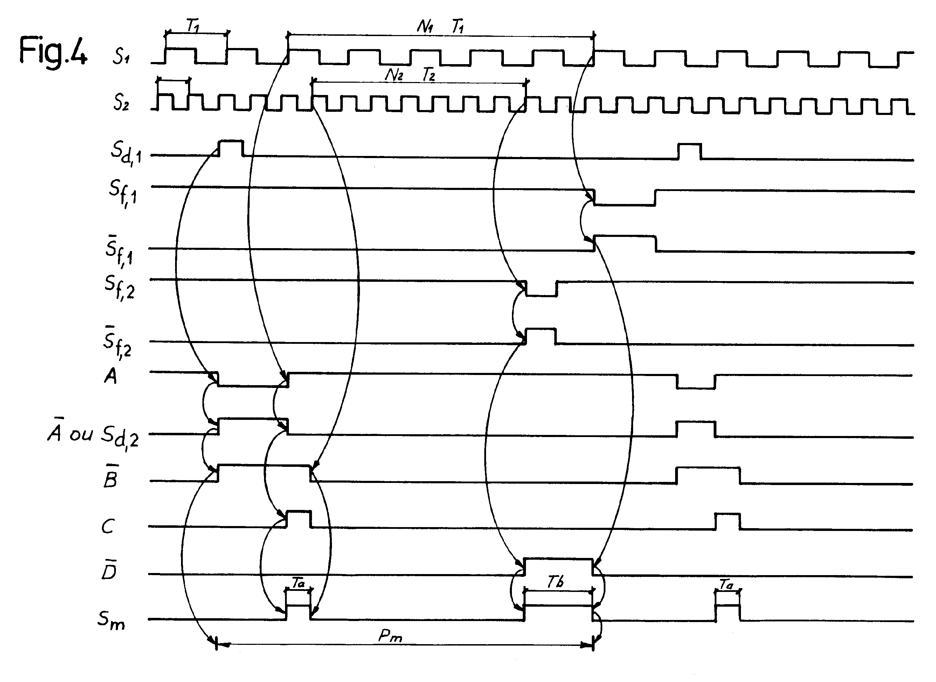

L'accéléromètre qui est représenté schématiquement sur la figure 1 est conçu pour permettre de mesurer une accélération linéaire. Cet accéléromètre comprend une base 2 sur laquelle est fixée un support 4 qui présente un profil rectangulaire et dont une partie déborde de cette base. Sur les faces opposées de cette partie du support 4 sont respectivement fixées, par l'une de leurs extrémités, deux résonateurs à quartz 6 et 8, les autres extrémités de ces résonateurs étant fixées sur les faces opposées et parallèles d'une plaque libre 10 de masse M.

Les résonateurs 6 et 8 sont des plaquettes en quartz, qui ont une forme parallélépipédique et qui comportent des électrodes non visibles sur le dessin. Ces résonateurs sont réalisés de manière à présenter une variation de leur fréquence propre en fonction des sollicitations longitudinales auxquelles ils sont soumis, une extension ayant pour effet d'augmenter cette fréquence, et une compression de la diminuer.

Les électrodes du résonateur 6 sont reliées à un circuit d'entretien 12, représenté sur la figure 2. Ce circuit 12 est destiné à mettre en oscillation permanente le résonateur 6, l'ensemble formant un capteur qui délivre, dans le cas présent, un signal carré $S_1$ de fréquence $F_1$ et de période $T_1 = 1/F_1$, comme celui qui est représenté sur la figure 4, les variations de $F_1$ et de $T_1$ étant représentatives de la contrainte subie par le résonateur. De manière similaire, le résonateur 8 est mis en oscillation par un circuit d'entretien 14, le capteur ainsi formé délivrant un signal $S_2$ de fréquence $F_2$ et de période $T_2 = 1/F_2$, comme celui que l'on peut également voir sur la figure 4.

Pour la suite, on supposera que l'accéléromètre n'est pas disposé horizontalement, comme sur le dessin, mais verticalement afin que le poids de la plaque 10 soit dirigé parallèlement à la direction longitudinale des résonateurs 6 et 8.

Dans ces conditions, tant que l'accéléromètre est au repos, les résonateurs 6 et 8 gardent une forme plane et oscillent à leurs fréquences propres nominales, désignées respectivement par $F_{1,0}$ et $F_{2,0}$, les périodes nominales qui correspondent à ces fréquences étant désignées, elles, par $T_{1,0}$ et $T_{2,0}$. Les fréquences $F_{1,0}$ et $F_{2,0}$ peuvent être égales. Toutefois, dans le cas de l'accéléromètre de la figure 1 où les résonateurs 6 et 8 se trouvent proches l'un de l'autre, il y a intérêt à choisir des fréquences suffisamment différentes pour éviter l'influence d'un résonateur sur l'autre.

Lorsque l'accéléromètre de la figure 1 est soumis à une accélération linéaire A dirigée perpendiculairement aux faces principales des résonateurs 6 et 8, le centre de gravité de la plaque 5 de masse M est soumis à une force dynamique F = M.A. Cette force a pour effet de faire fléchir les résonateurs 6 et 8 et, étant donné leur liaison rigide avec le support 4 et la plaque 10, de soumettre le premier principalement à un effort d'extension, et le second principalement à un effort de compression. Dans ces conditions, la période $T_1$ du signal $S_1$ diminue par rapport à la période nominale $T_{1,0}$, et la période $T_2$ du signal $S_2$ augmente par rapport à la période $T_{2,0}$.

Les deux capteurs de l'accéléromètre travaillent donc dans un mode différentiel, la différence entre les périodes $T_1$ et $T_2$ ou, ce qui revient au même, entre les fréquences $F_1$ et $F_2$, étant en effet représentative de la force F et de l'accélération A.

Dans un accéléromètre différentiel tel que représenté sur la figure 1, on sait que les périodes $T_1$ et $T_2$ sont liées à l'accélération A par les relations :

$$T_1 = T_{1,0} \cdot (1 + 2.K_1.A)^{-1/2} \quad (1)$$
$$T_2 = T_{2,0} \cdot (1 = 2.K_2.A)^{-1/2} \quad (2)$$

où $K_1$ et $K_2$ sont des constantes qui sont représentatives des sensibilités des résonateurs 6 et 8.

Ces constantes déterminent également la sensibilité de l'accéléromètre puisque, pour une valeur donnée de l'accélération A, une augmentation des valeurs $K_1$ et $K_2$ entraîne une augmentation de la différence $T_1$-$T_{1,0}$ et de la différence $T_2$-$T_{2,0}$.

Selon l'invention, l'accélération A est exprimée par la différence entre la durée $N_1.T_1$ et la durée $N_2.T_2$, où $N_1$ et $N_2$ sont des nombres entiers. La relation entre A et la différence $N_1.T_1 - N_2.T_2$ n'est pas linéaire. Les valeurs des nombres $N_1$ et $N_2$ peuvent être choisies selon différents critères dont on trouvera des exemples dans la suite de la description.

Posons $D_m = N_1.T_1 - N_2.T_2$. La quantité $D_m$ peut être positive ou négative selon les valeurs de $N_1$, $T_1$, $N_2$, $T_2$. Cette quantité peut être positive pour certaines accélérations et négatives pour d'autres accélérations, $N_1$ et $N_2$ étant constants, puisque, selon les relations (1) et (2), $T_1$ diminue avec A et $T_2$ augmente avec A.

Un circuit de traitement conforme à l'invention et produisant un signal représentatif de la quantité $D_m$ est représenté schématiquement sur la figure 2, sur laquelle il est désigné par la référence numérique 16.

Ce circuit de traitement 16 comprend essentiellement un premier moyen de comptage 18, un second moyen de comptage 20 et un circuit logique 22.

Le premier moyen de comptage 18 est conçu pour compter un nombre $N_1$ de périodes $T_1$ du signal $S_1$ délivré par le circuit d'entretien 12. Le nombre $N_1$ peut être chargé dans ce premier moyen de comptage à partir d'un moyen de mémorisation 24, par exemple de type EEPROM, sous la forme d'un signal numérique $S_{N1}$ trasmis sur un bus de données. Le début du comptage est donné par un signal $S_{d,1}$ reçu du circuit logique 22. A la fin du comptage, le premier moyen de comptage émet un signal $S_{f,1}$ vers le circuit logique 22.

Le second moyen de comptage 20 fonctionne de la même manière que le premier moyen de comptage 18. Il reçoit le signal $S_2$ du circuit d'entretien 14, un signal $S_{N2}$ représentatif du nombre $N_2$ du moyen de mémorisation 24, et un signal $S_{d,2}$ de début de comptage du circuit logique 22; il délivre un signal $S_{f,2}$ de fin de comptage au circuit logique 22.

Des valeurs différentes pour $N_1$ et $N_2$ peuvent être utilisées, par exemple en fonction de la température de travail de l'accéléromètre. Ces différentes valeurs peuvent être stockées de manière connue sous forme de tables dans le moyen de mémorisation 24.

Chaque moyen de comptage peut être constitué par exemple d'un décompteur (respectivement compteur) binaire chargé initialement avec la valeur $+N_1$ ou $+N_2$ (respectivement $-N_1$ ou $-N_2$) ou d'un diviseur à taux de division ajustable chargé avec la valeur $N_1$ ou $N_2$. A titre d'exemple, on peut utiliser des circuits compteurs-diviseurs à 8 bits du type 74 HC 40103; plusieurs circuits peuvent être mis en série pour réaliser des moyens de comptage à 16, 24, 32, ... bits.

A partir des instants de début de comptage et des instants de fin de comptage, définis par les signaux $S_{d,1}$ $S_{d,2}$, $S_{f,1}$ et $S_{f,2}$, le circuit logique 22 délivre un signal $S_m$ représentatif de la quantité $D_m$ égale à $N_1.T_1 - N_2.T_2$.

De manière générale, le circuit logique 22 doit être conçu pour déterminer $D_m$ quelles que soient les durées $N_1.T_1$ et $N_2.T_2$ et quelle que soit leur position relative dans l'intervalle de mesure, i.e. que ces durées se succédent, se chevauchent ou se trouvent incluses l'une dans l'autre.

Toutefois, il est possible de se trouver toujours dans le derniers cas en choisissant convenablement les valeurs $N_1$, $N_2$ et le décalage entre le début du comptage par chaque moyen de comptage.

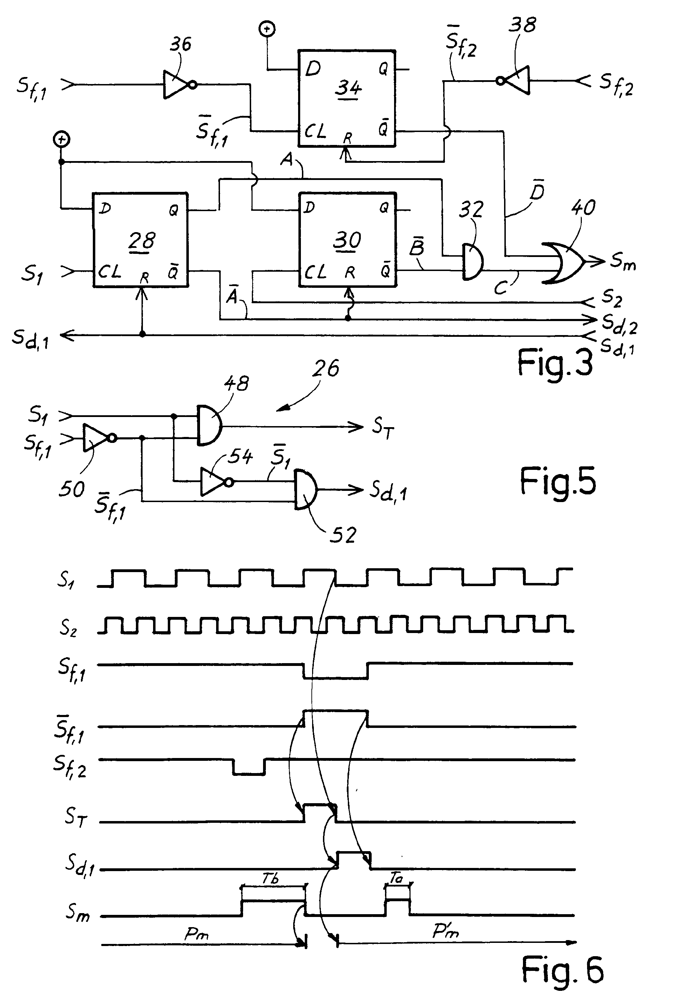

Un mode de réalisation d'un tel circuit logique est représenté schématiquement sur la figure 3, et les signaux apparaissant dans ce circuit sont représentés sur le chronogramme de la figure 4.

Le circuit logique 22 reçoit un signal d'impulsions

$S_{d,1}$ d'un circuit de déclenchement 26 (figure 2), chaque impulsion marquant le début d'un cycle de mesure. Ce signal $S_{d,1}$ est transmis directement au premier moyen de comptage 18 pour faire débuter le comptage. Plus précisément, le front montant du signal $S_{d,1}$ a pour effet de charger le nombre $N_1$ dans le premier moyen de comptage et le comptage débute sur le premier front montant du signal $S_1$ suivant le front descendant du signal $S_{d,1}$. Ce dernier est également appliqué sur l'entrée R de remise à zéro d'une bascule bistable 28 de type D. Celle-ci reçoit sur son entrée d'horloge CL le signal $S_1$ issu du circuit d'entretien 12 (figure 2) et sur son entrée de données D un signal qui est en permanence au niveau haut. Le signal $\overline{A}$ délivré par la sortie $\overline{Q}$ de la bascule 28 constitue le signal $S_{d,2}$ de début de comptage du second moyen de comptage, le front montant du signal $S_{d,2}$ ayant pour effet de charger le nombre $N_2$ dans le second moyen de comptage et le comptage débutant sur le premier front montant du signal $S_2$ suivant le front descendant du signal $S_{d,2}$.

La bascule 28 forme ainsi un moyen de synchronisation, qui fait débuter le comptage par le second moyen de comptage légèrement après le début du comptage par le premier moyen de comptage. L'intervalle de temps $T_a$ entre le début des deux comptages apparaît sous la forme d'une impulsion de largeur $T_a$ dans un signal C. Celui-ci est produit de la manière suivante.

Une bascule bistable 30 de type D reçoit respectivement sur ses entrées de données D, d'horloge CL et de remise à zéro R un signal en permanence au niveau haut, le signal $S_2$ et le signal $\overline{A}$. Elle délivre ainsi sur sa sortie $\overline{Q}$ un signal $\overline{B}$ qui passe au niveau haut sur le front montant du signal $\overline{A}$ et qui reste au niveau haut pendant une durée $T_a$ après que le signal $\overline{A}$ est retombé au niveau bas. On obtient donc simplement le signal C en combinant au moyen d'une porte ET 32 le signal $\overline{B}$ et le signal $A$, inverse au signal $\overline{A}$.

De manière similaire, la durée $T_b$ s'écoulant entre la fin du comptage par le second moyen de comptage et la fin du comptage par le premier moyen de comptage apparaît sous la forme d'une impulsion de largeur $T_b$ dans un signal $\overline{D}$.

Ce signal est produit par la sortie $\overline{Q}$ d'une bascule bistable 34 de type D dont les entrées de données D, d'horloge CL et de remise à zéro R reçoivent respectivement un signal en permanence au niveau haut, le signal $\overline{S}_{f,1}$, inverse du signal de fin de comptage délivré par le premier moyen de comptage 18, et le signal $\overline{S}_{f,2}$, inverse du signal de fin de comptage délivré par le second moyen de comptage 20. Des inverseurs 36, 38 permettent d'obtenir ces signaux $\overline{S}_{f,1}$ et $\overline{S}_{f,2}$.

On comprend que cet agencement fait passer le signal $\overline{D}$ au niveau haut à la fin du comptage par le second moyen de comptage et le fait retomber au niveau bas à la fin du comptage par le premier moyen de comptage.

Le circuit logique 22 comprend enfin une porte OU 40 qui reçoit les signaux C et $\overline{D}$ et délivre un signal $S_m$ qui présente, pour chaque cycle de mesure, deux impulsions de longueurs $T_a$ et $T_b$.

Le signal $S_m$ est donc représentatif de la différence entre la durée $N_1.T_1$ et la durée $N_2.T_2$, puisque cette différence est précisément égale à la quantité $T_a+T_b$. Le signal $S_m$ est ainsi représentatif de l'accélération A à laquelle sont soumis les résonateurs à quartz 6 et 8.

Comme on peut le voir sur la figure 2, le signal $S_m$ est reçu dans un moyen de conversion 42 qui convertit la durée $T_a+T_b$ en un nombre $D_m$. Le moyen de conversion peut être formé avantageusement d'un compteur binaire activé par le signal $S_{d,1}$ et dont le comptage est cadencé par un signal d'horloge $S_h$ délivré par une horloge 44. A titre d'exemple, on peut utiliser un ou plusieurs compteurs à 8 bits de type 74HC867 pour former un compteur à 8, 16, 24, 32, ... bits.

Dans le circuit de traitement décrit, le second moyen de comptage débute son comptage après le premier moyen de comptage et le termine avant. Dans ce cas, la quantité $D_m$ est égale à la somme $T_a+T_b$; on peut donc utiliser un compteur 42 à un sens. En revanche, dans le cas d'un circuit de traitement dans lequel, par exemple, le second moyen de comptage débute son comptage après le premier moyen de comptage et le termine après, la quantité $D_m$ est égale à $T_a-T_b$. On doit alors utiliser un compteur à deux sens (compteur-décompteur) pour compter pendant la durée $T_a$ et décompter pendant la durée $T_b$.

Le contenu du compteur 42 est transmis en permanence sur un bus de données vers un moyen de mémorisation 46, la valeur finale $D_m$ du contenu du compteur étant stockée dans ce moyen de mémorisation sur réception d'un signal $S_T$ reçu du circuit de déclenchement 26. Le signal $S_T$ marque la fin d'une mesure; il peu être élaboré à partir du signal $S_{f,1}$.

On a représenté sur la figure 5 un mode de réalisation du circuit de déclenchement 26, et sur le chronogramme de la figure 6 les signaux apparaissant dans ce circuit et le signal $S_m$.

Le circuit de déclenchement 26 comprend une porte ET 48 recevant le signal $\overline{S}_1$, et le signal $\overline{S}_{f,1}$, produit par inversion du signal $S_{f,1}$ et dans un inverseur 50, et une porte ET 52 recevant le signal $\overline{S}_{f,1}$ et le signal $\overline{S}_1$, produit par inversion du signal $S_1$ dans un inverseur 54.

Un intervalle de mesure $P_m$ se termine sur le front descendant de l'impulsion de largeur $T_b$ du signal $S_m$. Celle-ci apparaît sur un front montant du signal $S_1$ puisque, dans le circuit de traitement décrit, l'intervalle de temps de durée $N_1.T_1$ se termine après l'intervalle de temps de durée $N_2.T_2$.

Le signal $S_1$ délivré par la porte ET 48 présente ainsi une impulsion de largeur $T_1/2$ juste après la fin de l'intervalle de mesure $P_m$. Cette impulsion charge le contenu du compteur 42 dans le moyen de mémorisation 46.

Le signal $S_{d,1}$ délivré par la porte ET 52 présente une impulsion de largeur $T_1/2$ immédiatement après l'impulsion du signal $S_1$. Le front montant de l'impulsion du signal $S_{d,1}$ marque le début de l'intervalle de mesure $P'_m$ suivant.

Le circuit de déclenchement 26 représenté sur la figure 5 permet donc des mesures répétitives de l'accélération. Bien entendu, le circuit de traitement selon l'invention pourrait également être muni d'un circuit de déclenchement manuel commandant l'exécution d'un seul cycle de mesure à chaque activation.

Revenons maintenant à la figure 2. Il faut noter que le moyen de conversion pourrait être formé, par exemple, par un condensateur relié à une source de courant par un interrupteur, ce dernier étant commandé par le signal $S_m$ pour charger le condensateur pendant la durée $T_a + T_b$.

Toutefois, l'utilisation d'un compteur binaire est préférable, car la quantité $D_m$ est alors une valeur numérique ce qui facilite le traitement ultérieur par un microordinateur et permet plus facilement d'annuler le décalage (en anglais "offset") du signal $S_m$ ou, ce qui revient au même, de la quantité $D_m$. Rappelons en effet que pour une accélération A égale à zéro, la quantité $D_m$ est égale à $N_1.T_{1,0} - N_2.T_{2,0}$ qui est en général différente de zéro.

On peut annuler simplement ce décalage en préchargeant, au début de chaque cycle de mesure, le compteur binaire 42 avec la valeur $N_0$ égale à $-(N_1.T_{1,0} - N_2.T_{2,0}) / F_h$, où $F_h$ est la fréquence du signal d'horloge $S_h$. Cette valeur $N_0$ peut être stockée dans le moyen de mémorisation 24 et transmise sur un bus de données au compteur binaire 42 sous forme d'un signal numérique $S_{NO}$. Comme pour les ombres $N_1$ et $N_2$, on peut utiliser des valeurs différentes pour $N_0$ en fonction des conditions de travail de l'accéléromètre, et stocker ces valeurs sous forme de table dans le moyen de mémorisation 24.

Il faut noter que l'on pourrait également annuler ou au moins minimiser le décalage en choisissant des nombres entiers $N_1$ et $N_2$ qui annulent ou minimisent la valeur de la différence $N_1.T_{1,0} - N_2.T_{2,0}$.

Enfin, il est clair que le décalage peut être ignoré si sa contribution à la quantité $D_m$ est considérée comme négligeable.

La solution consistant à annuler le décalage en chargeant le compteur binaire avec la valeur $N_0$ est préférable à celle consistant à supprimer le décalage, dès l'origine, par un choix adéquat des nombres entiers $N_1$ et $N_2$, car la première solution n'impose aucune condition sur les nombres entiers $N_1$ et $N_2$. Ceci peut être mis à profit pour régler l'étalonnage de l'accéléromètre et/ou pour linéariser sa courbe de réponse.

En effet, rappelons que, dans l'accéléromètre décrit, les périodes $T_1$ et $T_2$ sont données par les relations

$$T_1 = T_{1,0} . (1 + 2.K_1.A)^{-1/2} \quad (1)$$
$$T_2 = T_{2,0} . (1 - 2.K_2.A)^{-1/2} \quad (2)$$

De manière générale, les termes $2.K_1.A$ et $2.K_2.A$ sont très petits devant l'unité, de sorte que l'on peut faire un développement en série suivant les puissances de A.

Le calcul, élémentaire, donne

$$D_m = N_1.T_1 - N_2.T_2 = D_0 - D_l + D_n$$

où

$$D_0 = N_1.T_{1,0} - N_2.T_{2,0}$$
$$D_1 = (N_1.T_{1,0}.K_1 + N_2.T_{2,0}.K_2).A$$
$$D_n = 3/2.(N_1.T_{1,0}.(K_1)^2 - N_2.T_{2,0}.(K_2)^2).A^2 - 5/2.(N_1.T_{1,0}.(K_1)^3 + N_2.T_{2,0}.(K_2)^3).A^3 + \varepsilon(A^4) ...$$

Dans cette expression, $D_0$ représente le décalage ("offset"), $D_1$ la partie linéaire et $D_n$ la partie non-linéaire.

On a déjà exposé plus haut comment on peut rendre le terme $D_0$ égal à zéro. On peut donc linéariser la courbe de réponse de l'accéléromètre en choisissant $N_1$ et $N_2$ de manière à annuler, ou au moins minimiser, en outre le terme $D_n$. Généralement, ceci peut être obtenu avec une très bonne approximation en choisissant les nombres entiers $N_1$ et $N_2$ tels que $N_1.T_{1,0}.(K_1)^2 - N_2.T_{2,0}.(K_2)^2$ soit le plus proche possible de zéro, $D_n$ se réduisant alors à un terme d'ordre 3 et à des termes d'ordres supérieurs qui sont souvent négligeables.

On peut en outre étalonner l'accéléromètre de manière que la gamme des accélérations mesurables corresponde au contenu maximum $C_{max}$ du compteur binaire 42. En supposant que $D_0$ et $D_n$ sont nuls ou négligeables, la condition sur les nombres entiers $N_1$ et $N_2$ pour réaliser l'étalonnage est que la quantité :

$$(A_{max} - A_{min}) (N_1.T_{1,0}.K_1 + N_2.T_{2,0}.K_2) - C_{max}/F_n$$

où $A_{max}$ et $A_{min}$ sont les accélérations maximale et minimale mesurables, tende vers zéro.

Le demandeur a réalisé un accéléromètre conforme à la figure 2. L'ensemble des éléments du circuit de traitement 16, ainsi que les circuits d'entretien 12 et 14 forment un circuit intégré unique. Les principales caractéristiques de cet accéléromètre sont les suivantes :

$F_{1,0} = 87$ kHz

$F_{2,0} = 89$ kHz

$F_1$ diminue de 0,5 pour la valeur extrême $-A_{max}$ de l'accélération et $F_2$ augmente de 0,5 % pour cette même valeur $-A_{max}$. Donc $F_{1,min} = 86,565$ kHz et $F_{2,max} = 89,445$ kHz. Pour $N_1 = 86$ et $N_2 = 87$ (soit un cycle de mesure de 1 ms), on a :

$$D_0 = N_1.T_{1,0} - N_2.T_{2,0} = 10,98 \ \mu s$$
$$D_{max} = N_1/F_{1,min} - N_2/F_{2,max} = 20,81 \ \mu s$$

de même, $D_{min} = N_1/F_{1,max} - N_2/F_{2,min} = 1,15 \ \mu s$ pour la valeur $+A_{max}$

$$\Delta D = D_{max} - D_0 = D_0 - D_{min} = 9,83 \ \mu s$$
$$F_c = 10 \text{ MHz}$$

Avec ces caractéristiques, la valeur maximale de l'accélération est mesurée, à la sortie du compteur 42, avec une précision de 1 %.

Il faut noter que la précision augmente linéairement avec les valeurs des nombres $N_1$ et $N_2$. Ainsi, si l'on choisit $N_1 = 860$ et $N_2 = 870$, la durée d'un cycle de mesure est de 10 ms, et la précision est de 0,1 %.

**Revendications**

1.  Circuit de traitement des signaux fournis par deux capteurs mesurant en mode différentiel une grandeur physique (A), l'un des capteurs (6, 12) délivrant un premier signal ($S_1$) ayant une première période ($T_1$) et l'autre capteur (8, 14) un second signal ($S_2$) ayant une seconde période ($T_2$), lesdites périodes variant en sens inverse l'une de l'autre en fonction de ladite grandeur physique, caractérisé d'une part en ce qu'il comprend :
    - un premier moyen de comptage (18) pour compter à l'intérieur d'une période de mesure ($P_m$) un nombre entier determiné $N_1$ de périodes $T_1$ du premier signal $S_1$,
    - un second moyen de comptage (20) pour compter à l'intérieur de ladite période de mesure ($P_m$) un nombre entier determiné $N_2$ de périodes $T_2$ du second signal $S_2$, et
    - un circuit logique (22) pour délivrer un signal $S_m$ représentatif de la différence entre la durée $N_1.T_1$ et la durée $N_2.T_2$, ledit signal étant représentatif de la valeur de ladite grandeur physique et d'autre part en ce que l'un au moins des nombres entiers $N_1$ ou $N_2$ est différent de 1.

2.  Circuit de traitement selon la revendication 1, caractérisé en ce que le signal $S_m$ est un signal binaire, maintenu dans un état logique déterminé pendant une durée $T_m$ égale à la différence entre les durées $N_1.T_1$ et $N_2.T_2$.

3.  Circuit de traitement selon la revendication 2, caractérisé en ce qu'il comprend un moyen de conversion (42) recevant le signal $S_m$ et délivrant un nombre $D_m$ en fonction de la durée $T_m$.

4.  Circuit de traitement selon la revendication 3, caractérisé en ce que le moyen de conversion est un compteur (42) recevant sur une entrée d'horloge un signal d'horloge $S_h$ et sur une entrée d'autorisation de comptage le signal $S_m$.

5.  Circuit de traitement selon l'une quelconque des revendications 1 à 4, dans lequel le signal $S_m$ comporte un signal de décalage représentatif de la différence entre les durées $N_1.T_{1,0}$ et $N_2.T_{2,0}$, où $T_{1,0}$ et $T_{2,0}$ sont les périodes respectives des premier et second capteurs au repos, caractérisé en ce que le circuit de traitement comprend des moyens pour supprimer ce signal de décalage.

6.  Circuit de traitement selon les revendications 4 et 5, caractérisé en ce que le compteur (42) est préchargé, lors de chaque mesure, avec un nombre $N_0$ compensant le signal de décalage.

7.  Circuit de traitement selon l'une quelconque des revendications 1 à 6, caractérisé en ce que les nombres entiers $N_1$ et $N_2$ sont choisis, et le circuit logique (22) est agencé, pour que le second moyen de comptage débute son comptage après le premier moyen de comptage et termine son comptage avant le premier moyen de comptage.

8.  Circuit de traitement selon les revendications 4 et 7, caractérisé en ce que le compteur (42) est un compteur à un sens.

9.  Circuit de traitement selon l'une quelconque des revendications 1 à 8, caractérisé en ce que les premier et second moyens de comptage comportent des moyens pour charger et modifier les valeurs des nombres entiers $N_1$ et $N_2$.

10.  Circuit de traitement selon la revendication 9, caractérisé en ce qu'il comprend un moyen de mémorisation (24) pour stocker au moins une valeur pour $N_1$ et au moins une valeur pour $N_2$.

11.  Circuit de traitement selon les revendications 6 et 10, caractérisé en ce que le moyen de mémorisation (24) stocke en outre au moins une valeur pour $N_0$.

12.  Circuit de traitement selon l'une quelconque des revendications 1 à 11 dans lequel le signal $S_m$ se compose d'une partie de signal variant de manière linéaire avec ladite grandeur physique à mesurer et une autre partie de signal variant de manière non linéaire avec ladite grandeur physique à mesurer, caractérisé en ce que les nombres entiers $N_1$ et $N_2$ sont choisis de manière à minimiser ladite autre partie de signal.

13.  Circuit de traitement selon la revendication 3, caractérisé en ce que les nombres entiers $N_1$ et $N_2$ sont choisis de manière que la gamme des valeurs mesurables de ladite grandeur physique corresponde à la gamme des valeurs possibles pour le nombre $D_m$ délivré par le moyen de conversion.

**Patentansprüche**

1.  Schaltung zur Verarbeitung von Signalen, abgegeben von zwei Sensoren, die im Differenzbetrieb eine physikalische Größe (A) messen, wobei einer der Sensoren (6, 12) ein erstes Signal ($S_1$) mit einer ersten Periode ($T_1$) und der andere Sensor (8, 14) ein zweites Signal ($S_2$) mit einer zweiten Periode ($T_2$) liefern, die Perioden im entgegengesetzten Sinn voneinander variieren als Funktion der physikalischen Größe, gekennzeichnet einerseits dadurch, daß sie umfaßt:

- ein erstes Zählmittel (18) zum Zählen innerhalb einer Meßperiode ($P_m$), eine vorbestimmte ganze Zahl $N_1$ an Perioden $T_1$ des ersten Signals $S_1$,
- ein zweites Zählmittel (20) zum Zählen innerhalb der Meßperiode ($Pm$), eine vorbestimmte ganze Zahl $N_2$ an Perioden $T_2$ des zweiten Signals $S_2$, und
- eine logische Schaltung (22) zum Liefern eines Signals $S_m$ repräsentativ für die Differenz zwischen der Dauer $N_1.T_1$ und der Dauer $N_2.T_2$, wobei das Signal repräsentativ ist für den Wert der physikalischen Größe, und andererseits dadurch, daß mindestens eine der ganzen Zahlen $N_1$ oder $N_2$ verschieden von 1 ist.

2. Schaltung zur Verarbeitung nach Anspruch 1, dadurch gekennzeichnet, daß das Signal $S_m$ ein Binärsignal ist, das einen Logikzustand, festgehalten während einer Dauer $T_m$ gleich der Differenz zwischen den Dauern $N_1.T_1$ und $N_2.T_2$, gehalten wird.

3. Schaltung zur Verarbeitung nach Anspruch 2, dadurch gekennzeichnet, daß sie ein Umwandlungsmittel (42) umfaßt, das das Signal $S_m$ empfängt und eine Zahl $D_m$ als Funktion der Dauer $T_m$ liefert.

4. Schaltung zur Verarbeitung nach Anspruch 3, dadurch gekennzeichnet, daß das Umwandlungsmittel eine Zähleinrichtung (42) ist, die auf einem Taktgebereingang ein Taktsignal $S_h$ und auf einem Zählfreigabeeingang das Signal $S_m$ empfängt.

5. Schaltung zur Verarbeitung nach einem der Ansprüche 1 bis 4, bei der das Signal $S_m$ ein Verschiebungssignal repräsentativ für die Differenz zwischen den Dauern $N_1.T_{1,0}$ und $N_2.T_{2,0}$ enthält, wo $T_{1,0}$ und $T_{2,0}$ die jeweiligen Perioden des ersten und zweiten untätigen Sensors sind, dadurch gekennzeichnet, daß die Schaltung zur Verarbeitung Mittel zum Unterdrücken dieses Verschiebungssignals umfaßt.

6. Schaltung zur Verarbeitung nach den Ansprüchen 4 und 5, dadurch gekennzeichnet, daß die Zähleinrichtung (42) während jeder Messung mit einer das Verschiebungssignal kompensierenden Zahl $N_0$ vorbelastet wird.

7. Schaltung zur Verarbeitung nach einem der Ansprüche 1 bis 6, dadurch gekennzeichnet, daß die ganzen Zahlen $N_1$ und $N_2$ gewählt sind und die Logikschaltung (22) angeordnet ist, damit das zweite Zählmittel seine Zählung nach dem ersten Zählmittel anfängt und seine Zählung vor dem ersten Zählmittel beendet.

8. Schaltung zur Verarbeitung nach den Ansprüchen 4 und 7, dadurch gekennzeichnet, daß die Zähleinrichtung (42) ein Zähler in einer Richtung ist.

9. Schaltung zur Verarbeitung nach einem der Ansprüche 1 bis 8, dadurch gekennzeichnet, daß die ersten und zweiten Zählmittel Mittel zum Laden und Ändern der Werte der ganzen Zahlen $N_1$ und $N_2$ enthalten.

10. Schaltung zur Verarbeitung nach Anspruch 9, dadurch gekennzeichnet, daß sie ein Speichermittel (24) zum Speichern mindestens eines Wertes für $N_1$ und mindestens eines Wertes für $N_2$ umfaßt.

11. Schaltung zur Verarbeitung nach den Ansprüchen 6 und 10, dadurch gekennzeichnet, daß das Speichermittel (24) außerdem mindestens einen Wert $N_0$ speichert.

12. Schaltung zur Verarbeitung nach einem der Ansprüche 1 bis 11, bei der das Signal $S_m$ sich zusammensetzt zum einen Teil aus einem Signal, das in linearer Weise mit der zu messenden physikalischen Größe variiert, und zum anderen Teil aus einem Signal, das in nicht linearer Weise mit der zu messenden physikalischen Größe variiert, dadurch gekennzeichnet, daß die ganzen Zahlen $N_1$ und $N_2$ in der Weise zum Minimieren des anderen Teils des Signals gewählt sind.

13. Schaltung zur Verarbeitung nach Anspruch 3, dadurch gekennzeichnet, daß die ganzen Zahlen $N_1$ und $N_2$ in der Weise gewählt sind, daß der Bereich der meßbaren Werte der physikalischen Größe mit dem Bereich der Werte korrespondiert, die für den Wert $D_m$, geliefert durch das Umwandlungsmittel, möglich sind.

## Claims

1. Processing circuit for signals supplied by two sensors measuring in the differential mode a physical parameter (A), one of the sensors (6, 12) delivering a first signal $(S_1)$ having a first period $(T_1)$ and the other sensor (8, 14) a second signal $(S_2)$ having a second period $(T_2)$, said periods varying in inverse ratio to each other as a function of the value of said physical parameter, characterized, in the one hand, in that it comprises :

- first counting means (18) for counting a given integer $N_1$ of periods $T_1$ of the first signal $S_1$ within a measurement period $(P_m)$,
- second counting means (20) for counting a given integer $N_2$ of periods $T_2$ of the second signal $S_2$ within said measurement period $(P_m)$, and
- a logic circuit (22) for delivering a signal $S_m$ representative of the difference between the time interval $N_1.T_1$ and the time interval $N_2.T_2$, said signal being representative of the value of said physical parameter and, on the other hand, in that at least one of the integers $N_1$ or $N_2$ is different from 1.

2. Processing circuit according to claim 1, characterized in that the signal $S_m$ is a binary signal, maintained in a determined logic state for a time interval $T_m$ equal to the difference between the time intervals $N_1.T_1$ and $N_2.T_2$.

3. Processing circuit according to claim 2, characterized in that it comprises means of conversion (42) receiving the signal $S_m$ and delivering a number $D_m$ as a function of the time interval $T_m$.

4. Processing circuit according to claim 3, characterized in that the means of conversion is a counter (42) receiving at a clock input a clock signal $S_h$ and at a count-enable input the signal $S_m$.

5. Processing circuit according to any one of claims 1 to 4, in which the signal $S_m$ comprises an offset signal representative of the difference between the time intervals $N_1.T_{1,0}$ and $N_2.T_{2,0}$, in which $T_{1,0}$ and $T_{2,0}$ are the respective periods of the first and second sensors in the rest position, characterized in that the processing circuit comprises means for suppressing this offset signal.

6. Processing circuit according to claims 4 and 5, characterized in that the counter (42) is preloaded, on the occasion of each measurement, with an integer $N_0$ compensating the offset signal.

7. Processing circuit according to any one of claims 1 to 6, characterized in that the integers $N_1$ and $N_2$ are selected and the logic circuit (22) is designed in such a way that the second counting means starts counting after the first counting means and terminates counting before the first counting means.

8. Processing circuit according to claims 4 and 7, characterized in that the counter (42) is an undirectional counter.

9. Processing circuit according to any one of claims 1 to 8, characterized in that the first and second counting means comprise means for loading and modifying the values of the integers $N_1$ and $N_2$.

10. Processing circuit according to claim 9, characterized in that it comprises a memory means (24) for storing at least one value for $N_1$ and at least one value for $N_2$.

11. Processing circuit according to claims 6 and 10, characterized in that the memory means (24) further stores at least one value for $N_0$.

12. Processing circuit according to any one of claims 1 to 11 in which the signal $S_m$ consists of one signal component varying linearly with said physical parameter to be measured and another signal component varying non-linearly with said physical parameter to be measured, characterized in that the integers $N_1$ and $N_2$ are selected in such a way as to minimise said other signal component.

13. Processing circuit according to claim 3, characterized in that the integers $N_1$ and $N_2$ are selected in such a way that the range of measurable values of said physical parameter correspond to the range of possible values for the number $D_m$ delivered by the conversion means.

Fig.1

Fig. 2

Fig.4

Fig.3

Fig.5

Fig. 6